(19) Europäisches Patentamt
European Patent Office
Office européen des brevets

(11) **EP 1 975 586 A2**

(12) **EUROPEAN PATENT APPLICATION**

(43) Date of publication:
**01.10.2008 Bulletin 2008/40**

(51) Int Cl.:
*G01L 5/16* (2006.01)   *G01L 1/14* (2006.01)

(21) Application number: **08153458.8**

(22) Date of filing: **27.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.03.2007 JP 2007082094**

(71) Applicant: **Nitta Corporation**
**Osaka-shi,**
**Osaka 556-0022 (JP)**

(72) Inventor: **Morimoto, Hideo**
**YAMATOKORIYAMA-SHI, NARA 639-1085 (JP)**

(74) Representative: **Thévenet, Jean-Bruno et al**
**Cabinet Beau de Loménie**
**158, rue de l'Université**
**75340 Paris Cédex 07 (FR)**

(54) **Sensor driving circuit**

(57)   A sensor driving circuit (500) includes a shift circuit (520) that outputs clock signals the high level period of each of which is limited to a predetermined period in one pulse period and whose high level periods are shifted by one pulse period from each other, to respective capacitance elements (C11, C12,..,C42) each of which changes in the distance of its electrodes to change its capacitance value in accordance with the magnitude of a force or moment. The circuit further includes addition signal outputting sections (531a,..531h) that output addition signals having their duty ratios corresponding to the capacitance values of the respective capacitance elements (C11, C12,..C42); and subtraction signal outputting sections (532a,..532h) that receive as their inputs the addition signals output from the addition signal outputting sections (531a,..531h), and output subtraction signals in which the high and low levels are inverted only during the pulse periods including the high level periods of the respective addition signals.

FIG. 7

**Description**

BACKGROUND OF THE INVENTION

1. Field of the Invention

The present invention relates to a sensor driving circuit, in particular, including variable capacitance elements in each of which the distance between electrodes changes to change the capacitance value of the element in accordance with the direction and magnitude of a load.

2. Description of Related Art

Japanese Patent Unexamined Publication No. 2000-35358 discloses a sensor driving circuit used in a weight measuring apparatus for measuring the weight of an object such as the weight of a human. The sensor driving circuit includes a number of variable capacitance elements in each of which the distance between electrodes changes to change the capacitance value of the element in accordance with the weight of the object. The heavier the weight of the object put on the weight measuring apparatus, the smaller the distance of the electrodes of each variable capacitance element and the higher the capacitance of the element. Thus, by summing the capacitance values of the variable capacitance elements, the value of the weight of the object can be obtained.

In the case of the sensor driving circuit disclosed in the above publication, it is only required to measure the value of the weight of an object put on the weight measuring apparatus. Thus, by provision of variable capacitance elements the capacitance of each of which increases due to a force applied in the gravitational direction, the magnitude of the force can be obtained. In the case of obtaining X-, Y-, and Z-axial forces and moments around the respective axes, however, it is required to obtain the difference in capacitance value between predetermined ones of the variable capacitance elements. Therefore, when the forces on the respective axes and the moments around the respective axes are obtained by the sensor driving circuit disclosed in the above publication, the difference in capacitance value must be obtained with the use of operational amplifiers or the like. This leads to a problem of increasing the number of circuit elements and therefore increasing the circuit scale.

SUMMARY OF THE INVENTION

An object of the present invention is to provide a sensor driving circuit capable of obtaining the direction and magnitude of a load in a simple construction of the circuit.

According to an aspect of the present invention, a sensor driving circuit comprises first to n-th ($\underline{n}$ is an integer of two or more) variable capacitance elements in each of which the distance between capacitance electrodes changes to change its capacitance value in accordance with the direction and magnitude of a load; and a shift circuit that outputs first to n-th clock signals to the respective first to n-th variable capacitance elements. One cycle of each clock signal is constituted by $\underline{m}$ pulse periods of periods T1 to Tm ($\underline{m}$ is an integer of $\underline{n}$ or more). The high level period of each clock signal is limited to a predetermined period in one pulse period. The high level periods of the clock signals are shifted by at least one pulse period from each other. The sensor driving circuit further comprises addition signal outputting sections including the first to n-th variable capacitance elements to which the first to n-th clock signals output from the shift circuit are input. The addition signal outputting sections output first to n-th addition signals having their duty ratios corresponding to the capacitance values of the respective first to n-th variable capacitance elements. The sensor driving circuit further comprises subtraction signal outputting sections to which the first to n-th addition signals output from the addition signal outputting sections. The subtraction signal outputting sections output first to n-th subtraction signals in which the high and low levels are inverted only during the respective pulse periods including the high level periods of the first to n-th addition signals.

According to the invention, as described above, by provision of the addition signal outputting sections, the addition signals can be obtained that has their duty ratios corresponding to the capacitance values of the capacitance elements. That is, the addition signals increase in their duty ratios as the capacitance values of the capacitance elements increase in accordance with the direction and magnitude of a load; and decrease in their duty ratios as the capacitance values of the capacitance elements decrease. In addition, by provision of the subtraction signal outputting sections, the first to n-th subtraction signals can be obtained in which the high and low levels are inverted only during the respective pulse periods including the high level periods of the first to n-th addition signals. That is, differently from the above addition signals, the subtraction signals decrease in their duty ratios as the capacitance values of the capacitance elements increase in accordance with the direction and magnitude of the load; and increase in their duty ratios as the capacitance values of the capacitance elements decrease. Thus, in the case of obtaining the direction and magnitude of the load by using differences in capacitance value, only by performing a logical operation of the addition signals, which increase in their duty ratios in accordance with the direction and magnitude of the load, and the subtraction signals, which decrease in their duty ratios in accordance with the direction and magnitude of the load, and thereby generating a pulse train, the direction and magnitude of the load can be obtained as the value of the duty ratio of the pulse train. Therefore, the direction and magnitude of the load can be obtained by a circuit having a simple construction with using no operational amplifier or the like.

Further, according to the invention, the shift circuit outputs the first to n-th clock signals in each of which the high level period is limited to a predetermined period in one pulse period and whose high level periods are shifted by at least one pulse period from each other. Thus, the first to n-th addition signals and the first to n-th subtraction signals are time-divided for each pulse period. As a result, even in the case of performing a logical operation of the addition signals and the subtraction signals, a pulse train can be generated whose high level periods do not overlap each other.

In the sensor driving circuit of the present invention, it is preferable that the shift circuit outputs, in addition to the first to n-th clock signals, (n+1)-th to 2n-th clock signals that are at high level only during the respective whole pulse periods including the periods during which the first to n-th clock signals are at high level, and the subtraction signal outputting sections comprise inverter elements that output first to n-th inverted signals in which the high and low levels of the first to n-th addition signals output from the addition signal outputting sections are inverted; and a first logical operation circuit that performs a logical operation of the (n+1)-th to 2n-th clock signals output from the shift circuit and the first to n-th inverted signals output from the inverter elements, to output the first to n-th subtraction signals. In this feature of the invention, the subtraction signals can easily be obtained in which the high and low levels are inverted only during the pulse periods including the periods during which the addition signals are at high level.

In the sensor driving circuit of the present invention, it is preferable that the addition signal outputting sections comprise first delay circuits that receive as their inputs the first to n-th clock signals output from the shift circuit, and output first to n-th delayed signals delayed in accordance with the capacitance values of the first to n-th variable capacitance elements; and a second logical operation circuit that performs a logical operation of the first to n-th delayed signals output from the first delay circuits and the first to n-th clock signals output from the shift circuit, to output the first to n-th addition signals. In this feature of the invention, the addition signals having their duty ratios corresponding to the capacitance values can easily be obtained.

In the sensor driving circuit of the present invention, it is preferable that a capacitance electrode of each of the first to n-th variable capacitance elements is divided into one electrode corresponding to a first portion of the element in which the distance between capacitance electrodes of the element substantially do not change irrespective of the direction and magnitude of the load, and the other electrode corresponding to a second portion of the element in which the distance between capacitance electrodes of the element changes in accordance with the direction and magnitude of the load, and the addition signal outputting sections comprise second delay circuits that receive as their inputs the first to n-th clock signals output from the shift circuit, and output first to n-th one electrode side delayed signals delayed in accordance with the capacitance values of the capacitance elements constituted by the one electrodes; third delay circuits that receive as their inputs the first to n-th clock signals output from the shift circuit, and output first to n-th other electrode side delayed signals delayed in accordance with the capacitance values of the capacitance elements constituted by the other electrodes; and a third logical operation circuit that performs a logical operation of the first to n-th one electrode side delayed signals output from the second delay circuits and the first to n-th other electrode side delayed signals output from the third delay circuits, to output the first to n-th addition signals. In this feature of the invention, even when the one electrode side delayed clock signals output from the second delay circuits and the other electrode side delayed clock signals output from the third delay circuits vary due to the temperature characteristic, the variations can be cancelled in the third logical operation circuit. As a result, the addition signals and the subtraction signals can be obtained in which the influence of the variations due to the temperature characteristic has been suppressed.

The sensor driving circuit of the present invention preferably further comprises a fourth logical operation circuit that performs a logical operation of signals selected out of the first to n-th addition signals output from the addition signal outputting sections and the first to n-th subtraction signals output from the subtraction signal outputting sections, to generate and output a pulse train. In this feature of the invention, the pulse train can easily be generated whose duty ratio can be considered to be the direction and magnitude of the load.

In the above case, advantageously, the fourth logical operation circuit receives as its input, in addition to the signals selected out of the first to n-th addition signals output from the addition signal outputting sections and the first to n-th subtraction signals output from the subtraction signal outputting sections, ones of the first to n-th clock signals output from the shift circuit, which are at high level in pulse periods other than the pulse periods in which the selected signals are at high level. In this feature of the invention, the pulse train to be output from the fourth logical operation circuit can be increased in its duty ratio. As a result, for example, when the duty ratio of the pulse train to be output from the fourth logical operation circuit is set to 50%, the voltage that is half the power supply voltage can be used as the reference.

In the sensor driving circuit comprising the above fourth logical operation circuit, it is preferable that the shift circuit outputs to the addition signal outputting sections the first to n-th clock signals whose high level periods are shifted by at least one pulse period from each other, in order to bias the high level periods of the pulse train to be output from the fourth logical operation circuit. In this feature of the invention, differently from the case that the high level periods are biased in the pulse train, a problem is dissolved that the signal quality lowers due to appearance of a high pulsation in the output waveform if the cutoff frequency of a low-pass filter is not lowered. In this case, because the cutoff frequency need not be lowered, a problem is also dissolved that the response speed of the sensor lowers.

The sensor driving circuit comprising the above fourth logical operation circuit, preferably further comprises a smoothing circuit that smoothes the pulse train output from the fourth logical operation circuit to output an analogue output voltage signal. The smoothing circuit comprises a resistor and a capacitor. In this feature of the invention, in comparison with the case of constructing such a smoothing circuit with the use of an operational amplifier, the pulse train can be converted into the analogue output voltage signal in a simpler construction.

BRIEF DESCRIPTION OF THE DRAWINGS

Other and further objects, features and advantages of the invention will appear more fully from the following description taken in connection with the accompanying drawings in which:

FIG. 1 is a central vertical sectional front view of a capacitance type sensor to which a sensor driving circuit according to a first embodiment of the present invention is applicable;
FIG. 2 is a sectional view taken along line A-A in FIG. 1;
FIG. 3 shows the arrangement of electrodes;
FIG. 4 shows a state of the capacitance type sensor when an X-axial force Fx is applied;
FIG. 5 shows a state of the capacitance type sensor when a Z-axial force Fz is applied;
FIG. 6 shows a state of the capacitance type sensor when a moment My around the Y-axis is applied;
FIG. 7 is a circuit diagram of a sensor driving circuit for driving the capacitance type sensor according to the first embodiment;
FIG. 8 is a timing chart of clock signals to be output from a shift circuit of the sensor driving circuit;
FIG. 9 is a timing chart of other clock signals to be output from the shift circuit of the sensor driving circuit;
FIG. 10 is a timing chart showing relations between input clock signals and output pulse signals of the sensor driving circuit;
FIG. 11 shows operations of an OR circuit and a low-pass filter of the sensor driving circuit;
FIG. 12 shows other operations of the OR circuit and the low-pass filter of the sensor driving circuit;
FIG. 13 shows the arrangement of electrodes of a capacitance type sensor to which a sensor driving circuit according to a second embodiment of the present invention is applicable;
FIG. 14 shows a state of the capacitance type sensor when a Y-axial force Fy is applied;
FIG. 15 is a circuit diagram of a sensor driving circuit for driving the capacitance type sensor according to the second embodiment;
FIG. 16 is a timing chart showing relations between input clock signals and output pulse signals of the sensor driving circuit;
FIG. 17 shows operations of an OR circuit and a low-pass filter of a sensor driving circuit according to a modification of the embodiments; and
FIG. 18 is a timing chart showing relations between input clock signals and output pulse signals of the sensor driving circuit according to the modification.

DESCRIPTION OF THE PREFERRED EMBODIMENTS

(First embodiment)

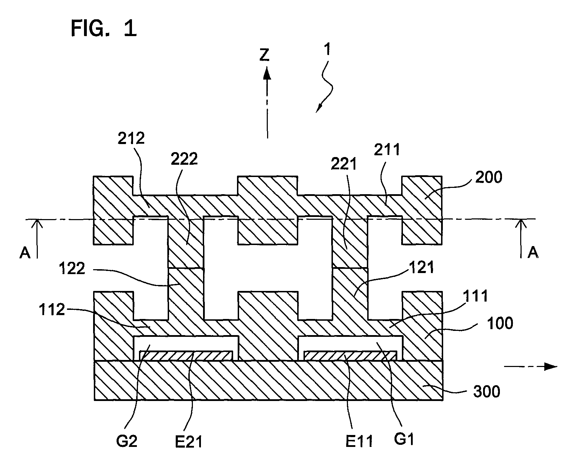

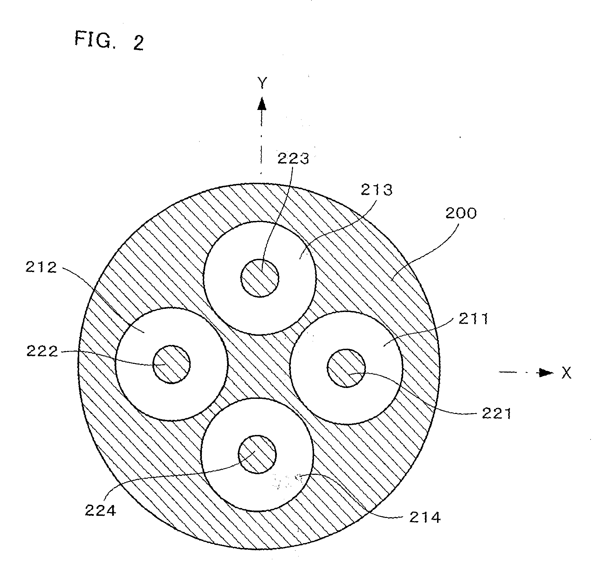

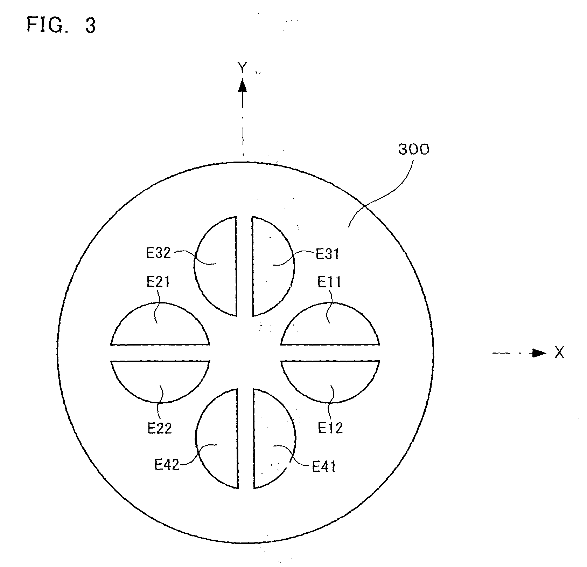

FIG. 1 is a central vertical sectional front view of a capacitance type sensor to which a sensor driving circuit according to a first embodiment of the present invention is applicable. FIG. 2 is a sectional view taken along line A-A in FIG. 1. FIG. 3 shows the arrangement of electrodes. First, the construction of the capacitance type sensor 1 to which a sensor driving circuit 500 according to the first embodiment of the present invention will be described with reference to FIGS. 1 to 3.

The capacitance type sensor 1 of FIG. 1 includes a first flange 100 fixed to a sufficiently rigid base 300; and a second flange 200 disposed so as to be opposed to the first flange 100. The base 300 is formed into a disk shape. The first flange 100 is supported by a peripheral portion and a central portion of the base 300. Either of the first and second flanges 100 and 200 is made of metal or the like, and formed into a disk shape. The first flange 100 has four thin flexible portions 111 to 114. Connecting shafts 121 to 124 stand at the centers of the flexible portions 111 to 114, respectively. Likewise, the second flange 200 has four thin flexible portions 211 to 214. Connecting shafts 221 to 224 stand at the centers of the flexible portions 211 to 214, respectively, as shown in FIG. 2.

The connecting shafts 121 to 124 are respectively connected to the connecting shafts 221 to 224 by suitable means such as bolts. Thereby, the flexible portions 111 to 114 and connecting shafts 121 to 124 of the first flange 100 are substantially symmetrical to the flexible portions 211 to 214 and connecting shafts 221 to 224 of the second flange 200, respectively. Because the connecting shafts 121 to 124 are tightly connected to the connecting shafts 221 to 224, respectively, the first and second flanges 100 and 200 can operate as one body.

As shown in FIG. 3, a pair of electrodes E11 and E12; a pair of electrodes E21 and E22; a pair of electrodes E31 and E32; and a pair of electrodes E41 and E42 are fixed on the upper surface of the base 300. Each electrode is formed into a substantially semicircular shape. The pairs of electrodes are disposed at X- and Y-axial positive and negative positions. The pair of electrodes E11 and E12 disposed at the X-axial positive position; and the pair of E21 and E22 disposed at the X-axial negative position are Y-axially distant from each other symmetrically with respect to the X-axis. The pair of electrodes E31 and E32 disposed at the Y-axial positive position; and the pair of E41 and E42 disposed at the Y-axial negative position are X-axially distant from each other symmetrically with respect to the Y-axis.

The flexible portions 111 to 114 of the first flange 100 are formed so as to be opposed to the respective pairs of electrodes. Circular gaps G1 to G4 are formed at regular angular intervals between the lower face of the first flange 100 and the base 300 so that the electrodes are distant from the respective flexible portions 111 to 114 of the first flange 100. Thus, capacitance elements C11, C12, C21, C22, C31, C33, C41, and C42 are formed between the respective electrodes E11, E12, E21, E22, E31, E32, E41, and E42, and the flexible portions 111 to 114 of the first flange 100.

As described above, the capacitance type sensor 1 has four sets of the pairs of electrodes, the flexible portions of the first flange 100, the flexible portions of the second flange 200, and the connecting shafts. The sets of the pairs of electrodes, the flexible portions of the first flange 100, the flexible portions of the second flange 200, and the connecting shafts, are disposed around the Z-axis at regular angular intervals of 90 degrees, and at the same distance from the Z-axis.

As described above, the first flange 100 has the flexible portions 111 to 114. Therefore, when a force is applied to the second flange 200, the flexible portions 111 to 114 receive forces through the connecting shafts 121 to 124 and 221 to 224. Thereby, the flexible portions 111 to 114 are displaced in accordance with the magnitude and direction of the applied three-dimensional force. This changes the capacitance values of the respective capacitance elements. Thus, the capacitance type sensor 1 functions as a six-axis force sensor for measuring forces on orthogonal three axes in the three-dimensional space, and moments around the respective axes.

Next, the principle for detecting forces and moments on and around the respective axes will be described. In the below description, it is assumed that the first flange 100 is fixed and the second flange 200 receives a force or moment.

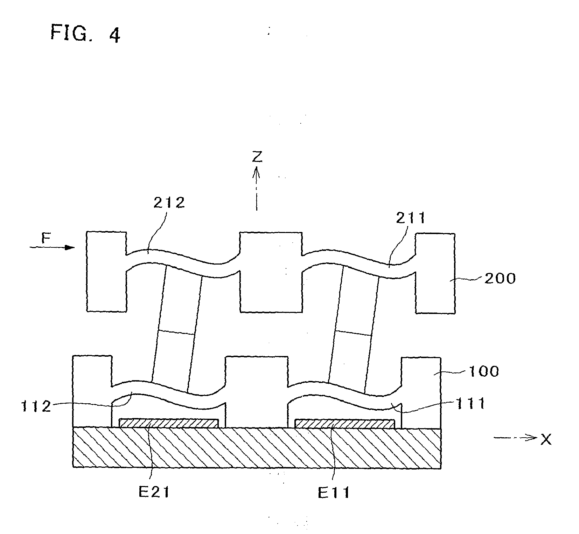

FIG. 4 shows a state of the capacitance type sensor 1 when an X-axial force Fx is applied. In this case, the flexible portions 111 to 114 of the first flange 100 and the flexible portions 211 to 214 of the second flange 200 are displaced as shown in FIG. 4. X-axial positive portions of the flexible portions 113 and 114 of the first flange 100 are displaced to get near to the respective electrodes E31 and E41. The gaps thereby decrease, and therefore the capacitance elements C31 and C41 increase in their capacitance values. On the other hand, X-axial negative portions of the flexible portions 113 and 114 of the first flange 100 are displaced to get away from the respective electrodes E32 and E42. The gaps thereby increase, and therefore the capacitance elements C32 and C42 decrease in their capacitance values. As for each of the capacitance elements C11, C12, C21, and C22, a part of the gap increases while another part of the gap decreases. Therefore, the changes in the capacitance value are cancelled by each other, as a result, the capacitance value scarcely changes.

The case of applying a Y-axial force Fy can be understood by shifting by 90 degrees the state when the X-axial force Fx is applied. Therefore, the description of the case of the Y-axial force Fy is omitted here.

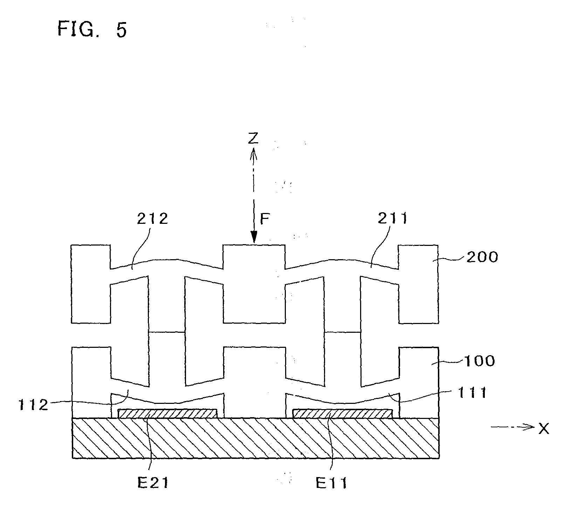

FIG. 5 shows a state of the capacitance type sensor 1 when a Z-axial force Fz is applied. The flexible portions 111 to 114 of the first flange 100 are displaced to get near to the respective electrodes E11 and E12; E21 and E22; E31 and E32; and E41 and E42. The gaps thereby decrease, and therefore the capacitance elements C11 and C12; C21 and C22; C31 and C32; and C41 and C42 increase in their capacitance values.

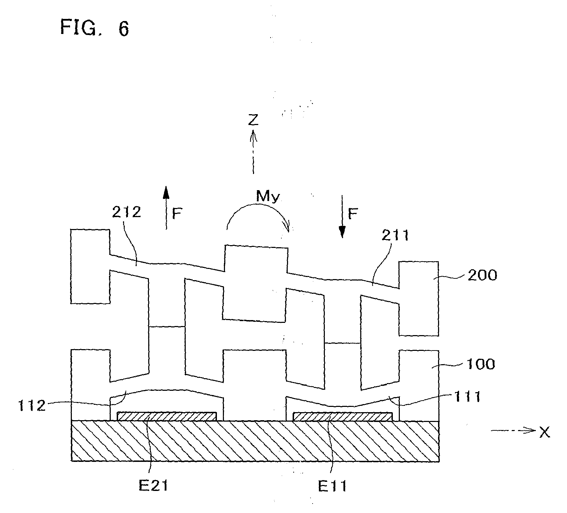

FIG. 6 shows a state of the capacitance type sensor 1 when a moment My around the Y-axis is applied. The flexible portion 111 of the first flange 100 is displaced to get near to the electrodes E11 and E12. The gaps thereby decrease, and therefore the capacitance elements C11 and C12 increase in their capacitance values. On the other hand, the flexible portion 112 of the first flange 100 is displaced to get away from the electrodes E21 and E22. The gaps thereby increase, and therefore the capacitance elements C21 and C22 decrease in their capacitance values. The capacitance values of the capacitance elements C31 and C41 scarcely change or somewhat increase. The capacitance values of the capacitance elements C32 and C42 scarcely change or somewhat decrease. In the below description, however, it is assumed that the capacitance values of those capacitance elements scarcely change.

The case of applying a moment Mx around the X-axis can be understood by shifting by 90 degrees the state when the moment My around the Y-axis is applied. Therefore, the description of the case of the moment Mx is omitted here.

When a moment Mz around the Z-axis is applied, the connecting shafts 121 to 124 and 221 to 224 are displaced to tilt in the same rotational direction around the Z-axis. A Y-axial negative portion of the flexible portion 111, a Y-axial positive portion of the flexible portion 112, an X-axial positive portion of the flexible portion 113, and a Y-axial negative portion of the flexible portion 114 of the first flange 100 are displaced to get near to the respective electrodes E12, E21, E31, and E42. The gaps thereby decrease, and therefore the capacitance elements C12, C21, C31, and C42 increase in their capacitance values. On the other hand, a Y-axial positive portion of the flexible portion 111, a Y-axial negative portion of the flexible portion 112, an X-axial negative portion of the flexible portion 113, and a Y-axial positive portion of the flexible portion 114 of the first flange 100 are displaced to get away from the respective electrodes E11, E22, E32, and E41. The gaps thereby increase, and therefore the capacitance elements C11, C22, C32, and C41 decrease in their capacitance values.

The below Table 1 shows the changes in the capacitance values of the capacitance elements when the above-described forces and moments are applied. In Table 1, "+" represents an increase in capacitance value; "-" represents a decrease in capacitance value; and "0" represents that the capacitance value scarcely changes. In the case of a force or moment in the reverse direction, the sign is inverted.

[Table 1]

| FORCE | C11 | C12 | C21 | C22 | C31 | C32 | C41 | C42 |
|-------|-----|-----|-----|-----|-----|-----|-----|-----|
| Fx | 0 | 0 | 0 | 0 | + | - | + | - |
| Fy | + | - | + | - | 0 | 0 | 0 | 0 |
| Fz | + | + | + | + | + | + | + | + |
| Mx | 0 | 0 | 0 | 0 | - | - | + | + |
| My | + | + | - | - | 0 | 0 | 0 | 0 |
| Mz | - | + | + | - | + | - | - | + |

The following facts will be understood from the above changes in the capacitance values of the capacitance elements.

The direction and magnitude of a force to Y-axially tilt the connecting shaft 121 can be detected from the difference between C11 and C12. The direction and magnitude of a force to Y-axially tilt the connecting shaft 122 can be detected from the difference between C21 and C22. The direction and magnitude of a force to X-axially tilt the connecting shaft 123 can be detected from the difference between C31 and C32. The direction and magnitude of a force to X-axially tilt the connecting shaft 124 can be detected from the difference between C41 and C42.

The direction and magnitude of a force to Z-axially displace the connecting shaft 121 can be detected from the sum of C11 and C12. The direction and magnitude of a force to Z-axially displace the connecting shaft 122 can be detected from the sum of C21 and C22. The direction and magnitude of a force to Z-axially displace the connecting shaft 123 can be detected from the sum of C31 and C32. The direction and magnitude of a force to Z-axially displace the connecting shaft 124 can be detected from the sum of C41 and C42.

The flexible portion 111 being opposed to the electrodes E11 and E12 can be considered to be a set of sensors that can detect two components of the magnitudes of Y- and Z-axial forces applied to the connecting shaft 121. The flexible portion 112 being opposed to the electrodes E21 and E22 can be considered to be a set of sensors that can detect two components of the magnitudes of Y- and Z-axial forces applied to the connecting shaft 122. The flexible portion 113 being opposed to the electrodes E31 and E32 can be considered to be a set of sensors that can detect two components of the magnitudes of X- and Z-axial forces applied to the connecting shaft 123. The flexible portion 114 being opposed to the electrodes E41 and E42 can be considered to be a set of sensors that can detect two components of the magnitudes of X- and Z-axial forces applied to the connecting shaft 124.

Thus, the capacitance type sensor 1 has a construction in which there are arranged at regular angular intervals four two-axis force sensors each of which can detect a force parallel to the arrangement of the electrodes and a force perpendicular to the electrodes.

From the above facts, the forces and moments can be detected by the calculations of the below Expression 1 performed by a sensor driving circuit 500 that will be described later.

[Expression 1]

$$Fx = (C31 - C32) + (C41 - C42)$$

$$Fy = (C11 - C12) + (C21 - C22)$$

$$Fz = (C11 + C12) + (C21 + C22) + (C31 + C32) + (C41 + C42)$$

$$Mx = (C41 + C42) - (C31 + C32)$$

$$My = (C11 + C12) - (C21 + C22)$$

$$Mz = (C12 - C11) + (C21 - C22) + (C31 - C32) + (C42 - C41)$$

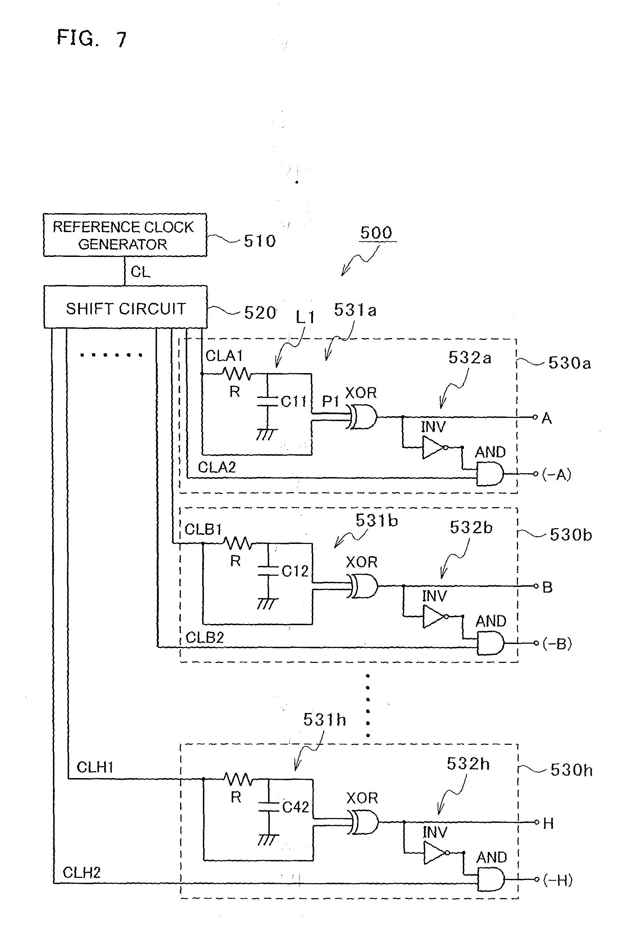

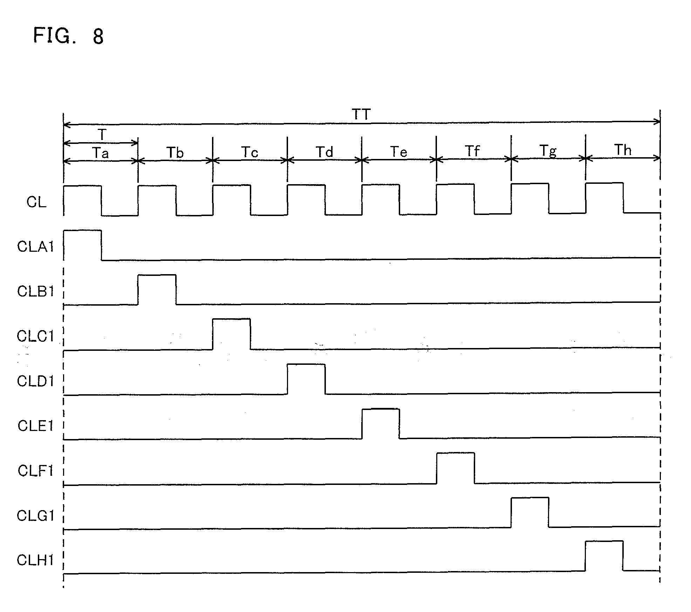

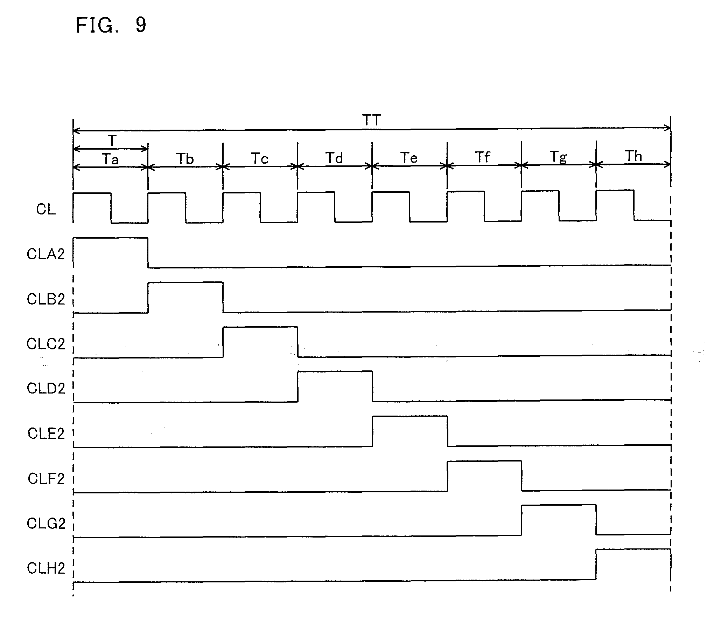

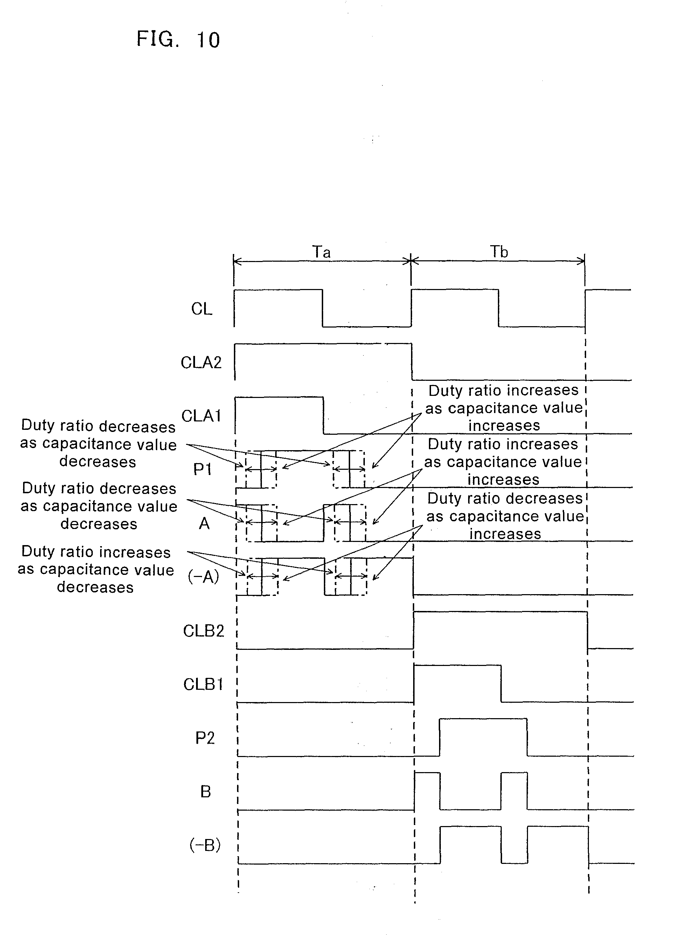

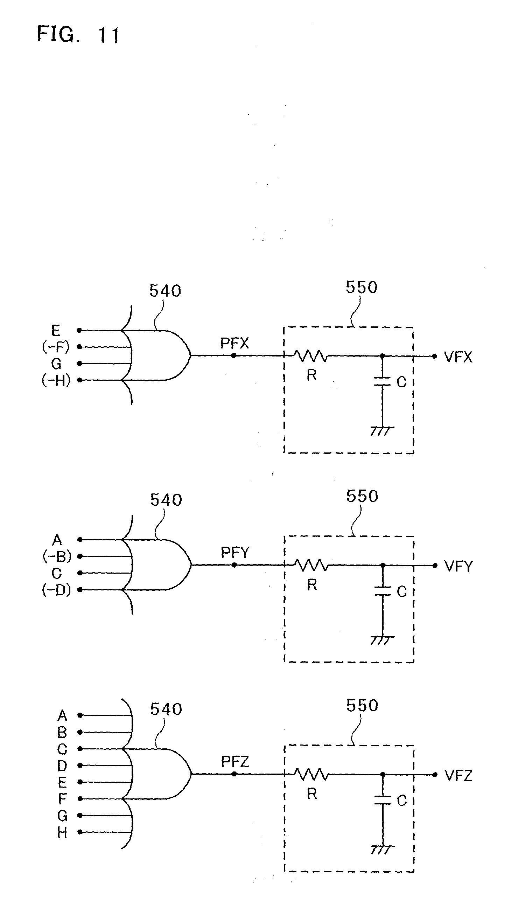

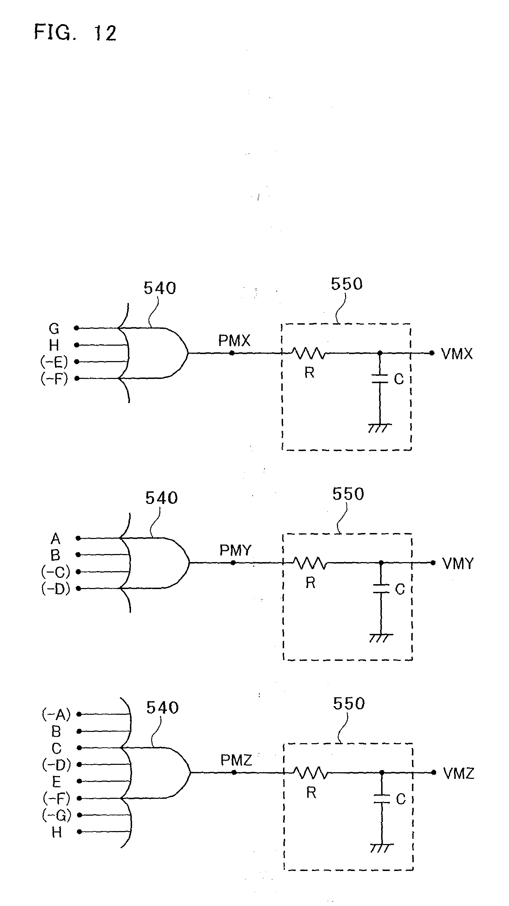

FIG. 7 is a circuit diagram of a sensor driving circuit for driving the capacitance type sensor according to the first embodiment shown in FIG. 1. FIGS. 8 and 9 are timing charts of clock signals to be output from a shift circuit of the sensor driving circuit of FIG. 7. FIG. 10 is a timing chart showing relations between input clock signals and output pulse signals of the sensor driving circuit of FIG. 7. FIGS. 11 and 12 show operations of an OR circuit and a low-pass filter of the sensor driving circuit of FIG. 7. The sensor driving circuit 500 applied to the above-described capacitance type sensor 1 will be described below.

The sensor driving circuit 500 of FIG. 7 outputs analogue output voltage signals respectively corresponding to Fx, Fy, Fz, Mx, My, and Mz shown in the above Expression 1. As shown in FIG. 7, the sensor driving circuit 500 includes a reference clock generator 510, a shift circuit 520, eight signal processing circuits 530a to 530h, an OR circuit 540, and a low-pass filter 550.

The reference clock generator 510 generates a clock signal CL being stable in pulse period and duty ratio, as shown in FIG. 8. The reference clock generator 510 then supplies the generated clock signal CL to the shift circuit 520. In the clock signal CL output from the reference clock generator 510, the duty ratio is preferably 50%.

The shift circuit 520 is made up of a shift register and so on. The shift circuit 520 respectively supplies to the subsequent eight signal processing circuits 530a to 530h eight clock signals CLA1 to CLH1, one cycle of each of which is constituted by eight pulse periods T of the clock signal CL, as shown in FIG. 8. In the clock signals CLA1 to CLH1, the first period is denoted by Ta; the second period is denoted by Tb; .., ; the seventh period is denoted by Tg; and the eighth period is denoted by Th. The clock signal CLA1 to be input to the signal processing circuit 530a is at high level only during a predetermined part of the first period Ta. The clock signal CLA2 to be input to the signal processing circuit 530b is at high level only during a predetermined part of the second period Tb. Likewise, the clock signals CLC1 to CLH1 to be input to the respective signal processing circuits 530c to 530h are at high level only during respective predetermined parts of the third to eighth periods Tc to Th. That is, to the respective signal processing circuits 530a to 530h input are the clock signals CLA1 to CLH1 whose high level periods are shifted by one pulse period in sequence.

Further, in addition to the above-described clock signals CLA1 to CLH1, The shift circuit 520 respectively supplies to the eight signal processing circuits 530a to 530h eight clock signals CLA2 to CLH2, one cycle of each of which is constituted by eight pulse periods T of the clock signal CL, as shown in FIG. 9. The clock signal CLA2 to be input to the signal processing circuit 530a is at high level only during the whole of the first period Ta. The clock signal CLB2 to be input to the signal processing circuit 530b is at high level only during the whole of the second period Tb. Likewise, the clock signals CLC2 to CLH2 to be input to the respective signal processing circuits 530c to 530h are at high level only during the respective wholes of the third to eighth periods Tc to Th. That is, to the respective signal processing circuits 530a to 530h input are the clock signals CLA2 to CLH2 whose high level periods are shifted by one pulse period in sequence.

Each of the eight signal processing circuits 530a to 530h is a pulse width modulation (PWM) circuit in which the duty ratio is changed in accordance with the capacitance values of the capacitance elements C11 to C42 of the above-described capacitance type sensor 1. The signal processing circuits 530a to 530h output addition signals A to H and subtraction signals (-A) to (-H), respectively. For this purpose, the signal processing circuits 530a to 530h include addition signal outputting sections 531a to 531h for outputting the addition signals A to H; and subtraction signal outputting sections 532a to 532h for outputting the subtraction signals (-A) to (-H), respectively.

The respective addition signal outputting sections 531a to 531h receive as their inputs the clock signals CLA1 to CLH1 output from the shift circuit 520. The respective addition signal outputting sections 531a to 531h then output the addition signals A to H having their duty ratios corresponding to the capacitance values of the respective capacitance elements C11 to C42. The addition signal outputting section 531a includes a delay circuit L1 and an exclusive OR element X-OR. The delay circuit L1 includes a resistance R of a predetermined value and a capacitance element C11. A delayed clock signal P1 delayed in accordance with the capacitance value of the capacitance element C11 is input to one input terminal of the exclusive OR element X-OR while the clock signal CLA1 is input to the other terminal of the exclusive OR element X-OR. Thereby, the exclusive OR element X-OR outputs the addition signal A that indicates the difference in phase between the clock signal CLA1 and the delayed clock signal P1, as shown in FIG. 10. In the addition signal A, when the capacitance value of the capacitance element C11 increases, the duty ratio increases because the delay of the clock signal CLA1 increases. Conversely, when the capacitance value of the capacitance element C11 decreases, the duty ratio decreases because the delay of the clock signal CLA1 decreases. Each of the addition signal outputting sections 531b to 531h has the same construction as the above-described addition signal outputting section 531a, and therefore the description thereof is omitted here. Like the case of the above-described addition signal A, the duty ratios of the addition signals B to H to be output from the respective addition signal outputting sections 531b to 531h increase or decrease in accordance with increases or decreases in capacitance value.

The subtraction signal outputting sections 532a to 532h receive as their inputs the clock signals CLA2 to CLH2 output from the shift circuit 520 and the addition signals A to H output from the above-described addition signal outputting sections 531a to 531h, respectively. The respective subtraction signal outputting sections 532a to 532h then output the subtraction signals (-A) to (-H) in each of which the high and low levels are inverted during the pulse period including the high level period of the corresponding one of the addition signals A to H. The subtraction signal outputting section 532a includes an inverter element INV and an AND element AND. The inverter element INV outputs an inverted signal A in which the high and low levels are inverted with respect to the addition signal A output from the addition signal outputting section 531a. The inverted signal A output from the inverter element is input to one input terminal of the AND element AND while the clock signal CLA2 output from the shift circuit 520 is input to the other input terminal of the AND element AND. Thereby, the AND element AND outputs the subtraction signal (-A) in which the high and low levels are inverted during the period Ta of the addition signal A, as shown in FIG. 10. Differently from the above-described addition signal A, in the subtraction signal (-A), the duty ratio decreases in accordance with an increase in the capacitance value of the capacitance element C11 while the duty ratio increases in accordance with a decrease in the capacitance value of the capacitance element C11. Each of the subtraction signal outputting sections 532b to 532h has the same construction as the above-described subtraction signal outputting section 532a, and therefore the description thereof is omitted here. Like the case of the above-described subtraction signal (-A), the duty ratios of the subtraction signals (-B) to (-H) to be output from the respective subtraction signal outputting sections 532b to 532h decrease or increase in accordance with increases or decreases in capacitance value.

Because the addition signals A to H output from the above-described addition signal outputting sections 531a to 531h increase or decrease in their duty ratios in accordance with an increase or decrease in capacitance value, those are applicable as values corresponding to "+C11" to "+C42" that the operators used for the calculations of Fx, Fy, Fz, Mx, My, and Mz in the above-described Expression 1 are "+". On the other hand, because the subtraction signals (-A) to (-H) output from the above-described subtraction signal outputting sections 532a to 532h decrease or increase in their duty ratios in accordance with an increase or decrease in capacitance value, those are applicable as values corresponding to "-C11" to "-C42" that the operators used for the calculations of Fx, Fy, Fz, Mx, My, and Mz in the above-described Expression 1 are "-". That is, the above Expression 1 can be revised into the below Expression 2.

[Expression 2]

$$Fx = (\text{``E''} + (\text{``}-\text{F''})) + (\text{``G''} + (\text{``}-\text{H''}))$$

$$Fy = (\text{``A''} + (\text{``}-\text{B''})) + (\text{``C''} + (\text{``}-\text{D''}))$$

$$Fz = (\text{``A''} + \text{``B''}) + (\text{``C''} + \text{``D''}) + (\text{``E''} + \text{``F''}) + (\text{``G''} + \text{``H''})$$

$$Mx = (\text{``G''} + \text{``H''}) + ((\text{``}-\text{E''}) + (\text{``}-\text{F''}))$$

$$My = (\text{``A''} + \text{``B''}) + ((\text{``}-\text{C''}) + (\text{``}-\text{D''}))$$

$$Mz = (\text{``B''} + (\text{``}-\text{A''})) + (\text{``C''} + (\text{``}-\text{D''})) + (\text{``E''} + (\text{``}-\text{F''})) + (\text{``G''} + \text{``}-\text{H''}))$$

Thus, as shown in the above Expression 2, Fx, Fy, Fz, Mx, My, and Mz can be obtained by additions of the pulse trains of the addition signals A to H and the subtraction signals (-A) to (-H),

The OR circuit 540 obtains the logical sum of signals selected out of the addition signals A to H output from the addition signal outputting sections 531a to 531h and the subtraction signals (-A) to (-H) output from the subtraction signal outputting sections 532a to 532h, and thereby the OR circuit 540 generates a resulting pulse train. More specifically, as shown in FIGS. 11 and 12, the OR circuit 540 obtains the logical sum of ones of the addition signals A to H and subtraction signals (-A) to (-H) necessary for calculating Fx, Fy, Fz, Mx, My, or Mz by the above Expression 2, and thereby the OR circuit 540 generates a resulting pulse train. For the calculations, the addition signals A to H and subtraction signals (-A) to (-H) are switched by a not-shown microprocessor to be input to the OR circuit 540. In a modification, OR circuits 540 respectively exclusive for Fx, Fy, Fz, Mx, My, and Mz may be provided for the above calculations,

The low-pass filter 550 is provided for smoothing the pulse train output from the OR circuit 540, to output an analogue output voltage signal. The low-pass filter 550 is a so-called CR low-pass filter constituted by a resistor and a capacitor.

In the first embodiment, as described above, by provision of the addition signal outputting sections 531a to 531h, the addition signals A to H can be obtained that increase in their duty ratios as the capacitance values of the capacitance elements C11 to C42 increase in accordance with the magnitudes of the forces and moments applied to the capacitance type sensor 1; and decrease in their duty ratios as the capacitance values of the capacitance elements C11 to C42 decrease. In addition, by provision of the subtraction signal outputting sections 532a to 532h, the subtraction signals (-A) to (-H) can be obtained that decrease in their duty ratios as the capacitance values of the capacitance elements C11 to C42 increase in accordance with the magnitudes of the forces and moments applied to the capacitance type sensor 1; and increase in their duty ratios as the capacitance values of the capacitance elements C11 to C42 decrease. Thus, in the case of obtaining the magnitudes of the forces and moments by using differences in capacitance value as shown in Expression 1, only by performing logical operations of the addition signals A to H, which increase in their duty ratios in accordance with the magnitudes of the forces and moments, and the subtraction signals (-A) to (-H), which decrease in their duty ratios in accordance with the magnitudes of the forces and moments, and thereby generating pulse trains, the magnitudes of the forces and moments can be obtained as the values of the duty ratios of the pulse trains. Therefore, the magnitudes of the forces and moments can be obtained by a circuit having a simple construction with using no operational amplifier or the like.

Further, in this embodiment, the shift circuit 520 outputs the clock signals CLA1 to CLH1 in each of which the high level period is limited to a predetermined period in one pulse period and whose high level periods are shifted by one pulse period in sequence. Thus, the addition signals A to H and the subtraction signals (-A) to (-H) are time-divided for each pulse period. As a result, even in the case of performing a logical operation of the addition signals A to H and the subtraction signals (-A) to (-H), a pulse train can be generated whose high level periods do not overlap each other.

Further, in this embodiment, in addition to the clock signals CLA1 to CLH1, the shift circuit 520 outputs the clock signals CLA2 to CLH2 that are at high level only during the respectively whole pulse periods including the periods in which the corresponding clock signals CLA1 to CLH1 are at high level. The subtraction signal outputting sections 532a to 532h include the inverter elements INV that output inverted signals in which the high and low levels are inverted with respect to the addition signals A to H output from the addition signal outputting sections 531a to 531h; and the AND elements AND that perform logical operations of the clock signals CLA2 to CLH2 output from the shift circuit 520 and the inverted signals output from the inverter elements INV, to output the subtraction signals (-A) to (-H). In this construction, the subtraction signals (-A) to (-H) can easily be obtained in which the high and low levels are inverted only during the pulse periods including the periods during which the addition signals A to H are at high level.

Further, in this embodiment, the addition signal outputting sections 531a to 531h include the delay circuits that receive as their inputs the clock signals CLA1 to CLH1 output from the shift circuit 520, and output delayed clock signals delayed in accordance with the capacitance values of the capacitance elements C11 to C42; and the exclusive OR elements X-OR that output the addition signals A to H indicating the differences in phase between the delayed clock signals output from the delay circuits and the clock signals CLA1 to CLH1 output from the shift circuit 520. In this construction, the addition signals A to H having their duty ratios corresponding to the capacitance values can easily be obtained.

Further, in this embodiment, there is provided the OR circuit 540 that obtains the logical sum of signals selected out of the addition signals A to H output from the addition signal outputting sections 531a to 531h and the subtraction signals (-A) to (-H) output from the subtraction signal outputting sections 532a to 532h, to generate a resulting pulse train. Thus, the pulse train can easily be generated whose duty ratio can be considered to be the magnitude of a force or moment.

Further, in this embodiment, there is provided the low-pass filter 550 constituted by a resistor and a capacitor as a smoothing circuit for smoothing the pulse train output from the OR circuit 540 to output an analogue output voltage signal. Thus, in comparison with the case of constructing such a smoothing circuit with the use of an operational amplifier, the pulse train can be converted into the analogue output voltage signal in a simpler construction.

(Second embodiment)

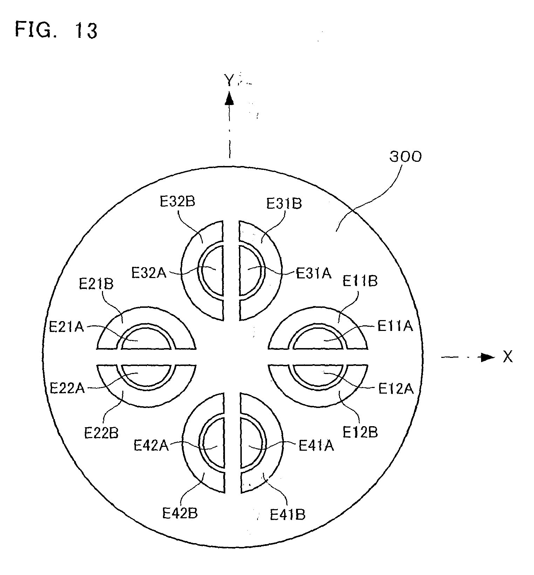

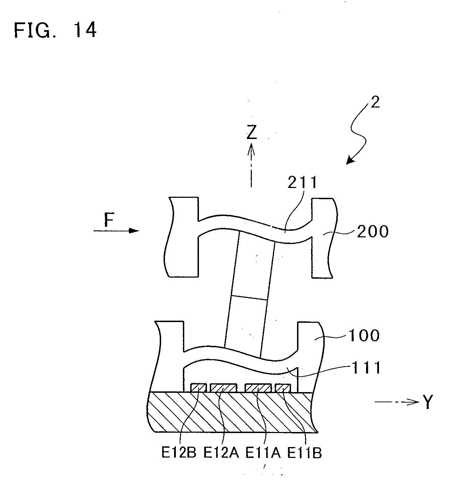

FIG. 13 shows the arrangement of electrodes of a capacitance type sensor to which a sensor driving circuit according to a second embodiment of the present invention is applicable. FIG. 14 shows a state of the capacitance type sensor when a Y-axial force Fy is applied. In this second embodiment, differently from the above-described first embodiment, a sensor driving circuit will be described that is for a capacitance type sensor in which each of the electrodes E11 to E42 of the capacitance elements C11 to C42 of the first embodiment is divided. The second embodiment has the same construction as the first embodiment other than that each electrode is divided and the circuit construction is changed accordingly. Thus, the same construction as the first embodiment will be omitted.

As shown in FIG. 13, on the upper face of the base 300, there are fixed a set of divided electrodes E11A and E11B; a set of divided electrodes E12A and E12B; a set of divided electrodes E21A and E21B; a set of divided electrodes E22A and E22B; a set of divided electrodes E31A and E31B; a set of divided electrodes E32A and E32B; a set of divided electrodes E41A and E41B; and a set of divided electrodes E42A and E42B. Each of the inner electrodes E11A to E42A is formed into a substantially semicircular shape. Each of the outer electrodes E11B to E42B is formed into an arc around the corresponding one of the inner electrodes E11A to E42A. The set of electrodes E11A and E11B and the set of electrodes E12A and E12B disposed at the X-axial positive position; and the set of electrodes E21A and E21B and the set of electrodes E22A and E22B disposed at the X-axial negative position are Y-axially distant from each other symmetrically with respect to the X-axis. The set of electrodes E31A and E31B and the set of electrodes E32A and E32B disposed at the Y-axial positive position; and the set of electrodes E41A and E41B and the set of electrodes E42A and E42B disposed at the Y-axial negative position are X-axially distant from each other symmetrically with respect to the Y-axis.

The electrodes are distant from the respective flexible portions 111 to 114 of the first flange 100. Thus, capacitance elements C11A, C11B, C12A, C12B, C21A, C21B, C22A, C22B, C31A, C31B, C32A, C32B, C41A, C41B, C42A, and C42B are formed between the respective electrodes E11A, E11B, E12A, E12B, E21A, E21B, E22A, E22B, E31A, E31B, E32A, E32B, E41A, E41B, E42A, and E42B and the flexible portions 111 to 114 of the first flange 100.

When a Y-axial force Fy is applied, the flexible portion 111 of the first flange 100 and the flexible portion 211 of the second flange 200 are displaced as shown in FIG. 14. A Y-axial positive central portion of the flexible portion 111 of the first flange 100 is displaced to get near to the electrode E11A while a Y-axial positive peripheral portion of the flexible portion 111 of the first flange 100 is scarcely displaced. Therefore, the capacitance element C11A increases in its capacitance value while the capacitance element C11B scarcely changes in its capacitance value. On the other hand, a Y-axial negative central portion of the flexible portion 111 of the first flange 100 is displaced to get away from the electrode E12A while a Y-axial negative peripheral portion of the flexible portion 111 of the first flange 100 is scarcely displaced. Therefore, the capacitance element C12A decreases in its capacitance value while the capacitance element C12B scarcely changes in its capacitance value.

When the Y-axial force Fy is applied, the flexible portion 112 of the first flange 100 and the flexible portion 212 of the second flange 200 are displaced like the flexible portion 111 of the first flange 100 and the flexible portion 211 of the second flange 200. Therefore, the capacitance element C21A increases in its capacitance value while the capacitance element C21B scarcely changes in its capacitance value. On the other hand, the capacitance element C22A decreases in its capacitance value while the capacitance element C22B scarcely changes in its capacitance value.

The case that Fx, Fz, Mx, My, or Mz is applied to the capacitance type sensor 2 is similar to the above. Therefore, the description thereof is omitted here.

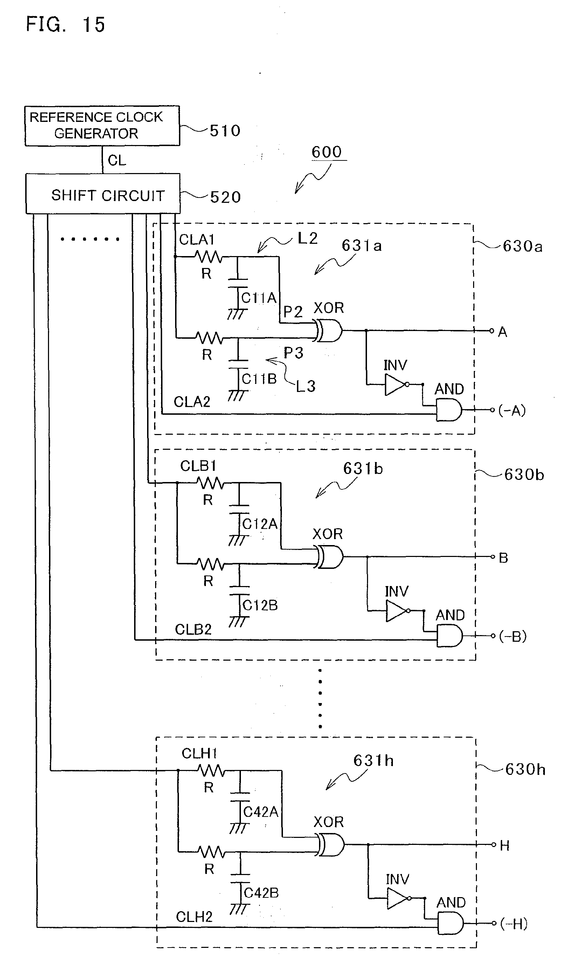

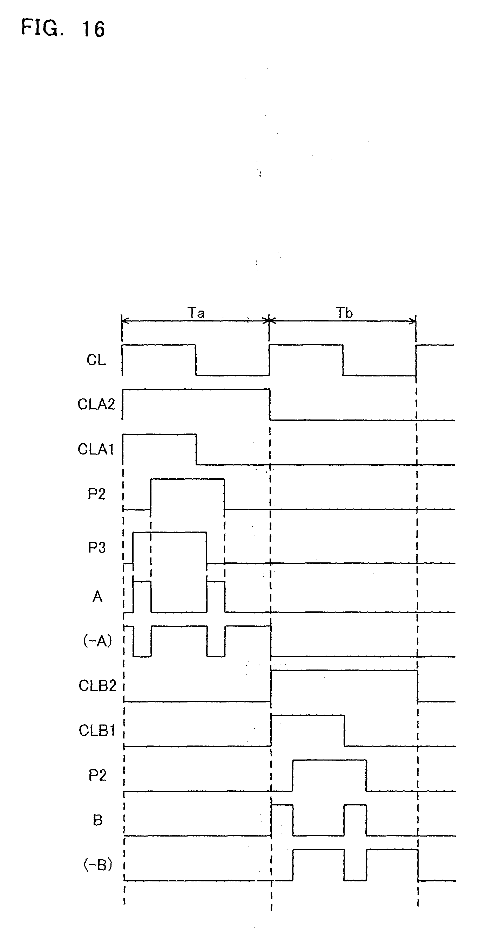

FIG. 15 is a circuit diagram of a sensor driving circuit for driving the capacitance type sensor according to the second embodiment shown in FIG. 13. FIG. 16 is a timing chart showing relations between input clock signals and output pulse signals of the sensor driving circuit of FIG. 15. The sensor driving circuit 600 applied to the above-described capacitance type sensor 2 will be described below.

As shown in FIG. 15, respective addition signal outputting sections 631a to 631h of signal processing sections 630a to 630h receive as their inputs the clock signals CLA1 to CLH1 output from the shift circuit 520. The respective addition signal outputting sections 631a to 631h then output the addition signals A to H having their duty ratios corresponding to the capacitance values of the respective capacitance elements C11A to C42A. The addition signal outputting section 631a includes a delay circuit L2, a delay circuit L3, and an exclusive OR element X-OR. The delay circuit L2 includes a resistance R of a predetermined value and a capacitance element C11A. The delay circuit L3 includes a resistance R of a predetermined value and a capacitance element C11B. A delayed clock signal P2 delayed in accordance with the capacitance value of the capacitance element C11A is input to one input terminal of the exclusive OR element X-OR while a delayed clock signal P3 delayed in accordance with the capacitance value of the capacitance element C11B is input to the other terminal of the exclusive OR element X-OR. Thereby, the exclusive OR element X-OR outputs the addition signal A that indicates the difference in phase between the delayed clock signals P2 and P3, as shown in FIG. 16. The capacitance element C11B constituted by the outer electrode E11B scarcely changes in its capacitance value irrespective of the magnitude of a force or moment applied to the capacitance type sensor 2. Thus, the delayed clock signal P3 output from the delay circuit L3 can be considered to be delayed in accordance with the temperature characteristic. On the other hand, the capacitance element C11A constituted by the inner electrode E11A changes in its capacitance value in accordance with the magnitude of a force or moment applied to the capacitance type sensor 2. Thus, the delayed clock signal P2 output from the delay circuit L2 can be considered to be delayed in accordance with both the temperature characteristic and the change in the capacitance value. Therefore, the exclusive OR element X-OR to which the delayed clock signals P2 and P3 were input outputs the addition signal A in which the delays caused by the temperature characteristic have been cancelled. In the addition signal A, when the capacitance value of the capacitance element C11A increases, the duty ratio increases because the delay of the clock signal CLA1 increases. Conversely, when the capacitance value of the capacitance element C11A decreases, the duty ratio decreases because the delay of the clock signal CLA1 decreases. Each of the addition signal outputting sections 631b to 631h has the same construction as the above-described addition signal outputting section 631a, and therefore the description thereof is omitted here. Like the case of the above-described addition signal A, the duty ratios of the addition signals B to H to be output from the respective addition signal outputting sections 631b to 631h increase or decrease in accordance with increases or decreases in capacitance value.

In the second embodiment, as described above, the electrodes are divided into the outer electrodes E11B to E42B that substantially do not change in the distance between their capacitance electrodes irrespective of the magnitude of a force or moment; and the inner electrodes E11A to E42A that change in the distance between their capacitance electrodes in accordance with the magnitude of a force or moment. The addition signal outputting sections 631a to 631h include the delay circuits L2 that receive as their inputs the clock signals CLA1, to CLH1 output from the shift circuit 520, and output the delayed clock signals P2 delayed in accordance with the capacitance values of the capacitance elements constituted by the inner electrodes E11A to E42A; the delay circuits L3 that receive as their inputs the clock signals CLA1 to CLH1 output from the shift circuit 520, and output the delayed clock signals P3 delayed in accordance with the capacitance values of the capacitance elements constituted by the outer electrodes E11B to E42B; and the exclusive OR elements X-OR that output the addition signals A to H indicating the differences in phase between the delayed clock signals P2 output from the delay circuits L2 and the delayed clock signals P3 output from the delay circuits L3. In this construction, even when the delayed clock signals P2 output from the delay circuits L2 and the delayed clock signals P3 output from the delay circuits L3 vary due to the temperature characteristic, the variations can be cancelled in the exclusive OR elements X-OR. As a result, the addition signals A to H and the subtraction signals (-A) to (-H) can be obtained in which the influence of the variations due to the temperature characteristic has been suppressed.

Also in this second embodiment, the same effects as in the first embodiment can be obtained.

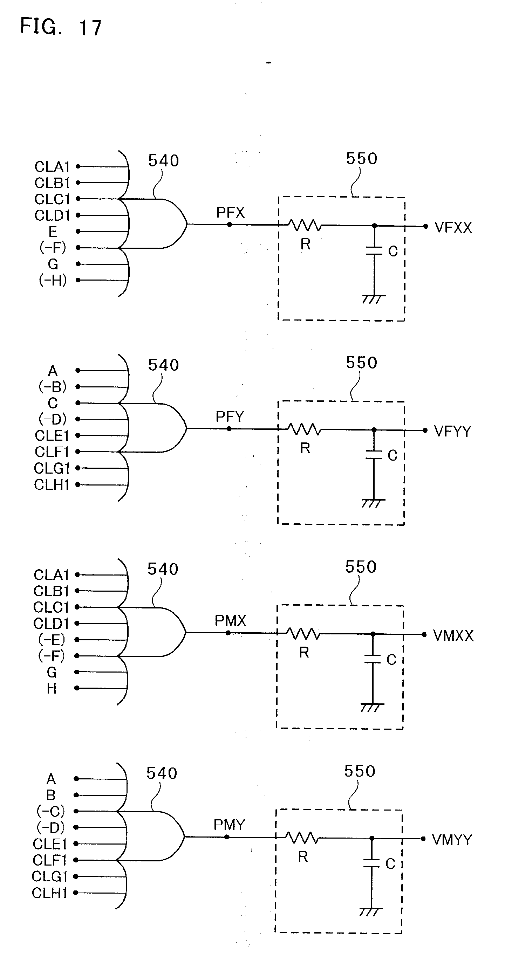

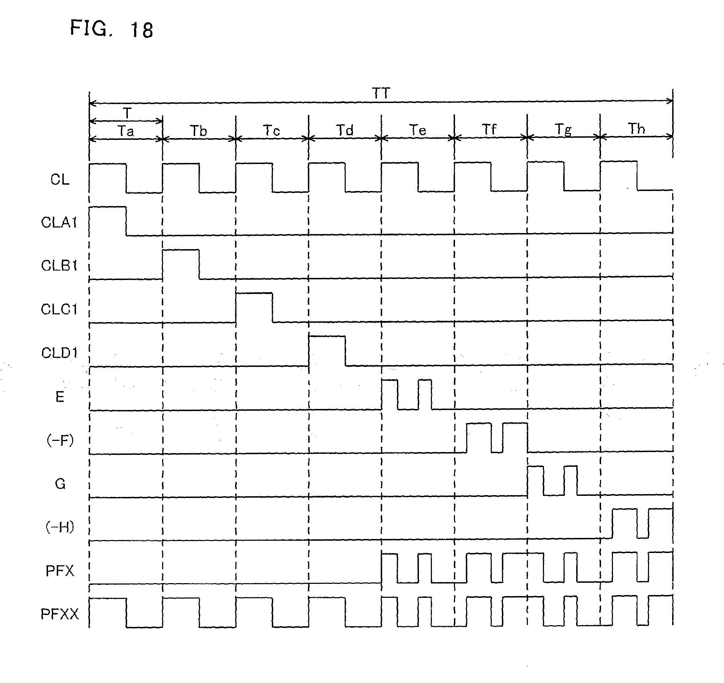

In the above-described embodiments, the OR circuit 540 obtains the logical sum of ones of the addition signals A to H and the subtraction signals (-A) to (-H) necessary for calculating Fx, Fy, Fz, Mx, My, or Mz by the above Expression 2, to generate a pulse train. However, the present invention is not limited to that. In a modification, as shown in FIG. 17, in addition to ones of the addition signals A to H and the subtraction signals (-A) to (-H) necessary for calculating Fx, Fy, Fz, Mx, My, or Mz, ones of the clock signals CLA1 to CLH1 output from the shift circuit 520, which are at high level in pulse periods other than the pulse periods in which the signal necessary for the calculation are at high level, may be input to the OR circuit 540. By way of example, as shown in FIG. 18, in addition to the addition signal E, the subtraction signal (-F), the addition signal G, and the subtraction signal (-H) necessary for calculating Fx, the clock signal CLA1 to CLD1, which are at high level during the periods except the periods during which the addition signal E, the subtraction signal (-F), the addition signal G, and the subtraction signal (-H) are at high level, are input to the OR circuit 540. This increases the duty ratio of the pulse train PFXX to be output from the OR circuit 540 in comparison with the duty ratio of the pulse train PFX generated from only the addition signal E, the subtraction signal (-F), the addition signal G, and the subtraction signal (-H). Thereby, when the duty ratio of the pulse train is set to 50%, the voltage that is half the power supply voltage can be used as the reference. As for Fz and Mz, however, because the signals that are at high level during the whole periods are used, clock signals can not be input in addition to the signals.

In the above-described embodiments, as shown in Expression 2, in ones of the addition signals A to H and the subtraction signals (-A) to (-H) necessary for calculating Fx, Fy, Fz, Mx, My, or Mz, the high level periods of the pulse train are biased to the first or second half of the pulse train. For this reason, in a modification, in order not to bias the high level periods of the pulse train to be output from the OR circuit 540, the shift circuit 520 may output clock signals whose high level periods are shifted by at least one period from each other, to the addition signal outputting sections. For example, when the clock signals CLA1 and CLA2; CLE1 and CLE2; CLB1 and CLB2; CLF1 and CLF2; CLC1 and CLC2; CLG1 and CLG2; CLD1 and CLD2; and CLH1 and CLH2 are input to the respective capacitance elements C11 to C42, the period during which the duty ratio is 0% appears once in each two periods in the pulse train to be output from the OR circuit 540. Thereby, differently from the case that the high level periods are biased in the pulse train, a problem is dissolved that the signal quality lowers due to appearance of a high pulsation in the output waveform if the cutoff frequency of the low-pass filter is not lowered. In the modification, because the cutoff frequency need not be lowered, a problem is also dissolved that the response speed of the sensor lowers.

The embodiments of the present invention has been described above with reference to the drawings. However, the specific construction of the invention should be considered not to be limited to those embodiments. The invention contains any change within the scope of not the description of the above embodiments but the appended claims.

While this invention has been described in conjunction with the specific embodiments outlined above, it is evident that many alternatives, modifications and variations will be apparent to those skilled in the art. Accordingly, the preferred embodiments of the invention as set forth above are intended to be illustrative, not limiting. Various changes may be made without departing from the scope of the invention as defined in the following claims.

**Claims**

1. A sensor driving circuit comprising:

   first to n-th ($\underline{n}$ is an integer of two or more) variable capacitance elements (C11,..C42) in each of which the distance between capacitance electrodes changes to change its capacitance value in accordance with the direction and magnitude of a load;
   a shift circuit (520) that outputs first to n-th clock signals (CLA1,..CLH1) to the respective first to n-th variable capacitance elements (C11,..C42), one cycle of each clock signal being constituted by $\underline{m}$ pulse periods of periods T1 to Tm ($\underline{m}$ is an integer of $\underline{n}$ or more), the high level period of each clock signal being limited to a predetermined period in one pulse period, the high level periods of the clock signals being shifted by at least one pulse period from each other;
   addition signal outputting sections (531a,..531h) including the first to n-th variable capacitance elements (C11,..C42) to which the first to n-th clock signals (CLA1,..CLH1) output from the shift circuit (520) are input, the addition signal outputting sections (531a,..531h) outputting first to n-th addition signals having their duty ratios corresponding to the capacitance values of the respective first to n-th variable capacitance elements (C11,..C42); and
   subtraction signal outputting sections (532a,..532h) to which the first to n-th addition signals output from the addition signal outputting sections (531a,..531h), the subtraction signal outputting sections (532a,..532h) outputting first to n-th subtraction signals in which the high and low levels are inverted only during the respective pulse periods including the high level periods of the first to n-th addition signals.

2. The sensor driving circuit according to claim 1, wherein the shift circuit (520) outputs, in addition to the first to n-th clock signals (CLA1,..CLH1), (n+1)-th to 2n-th clock signals (CLA2,..CLH2) that are at high level only during the respective whole pulse periods including the periods during which the first to n-th clock signals (CLA1,..CLH1) are at high level, and

   the subtraction signal outputting sections (532a,..532h) comprise inverter elements (INV) that output first to n-th inverted signals in which the high and low levels of the first to n-th addition signals output from the addition signal outputting sections (531a,..531h) are inverted; and
   a first logical operation circuit that performs a logical operation of the (n+1)-th to 2n-th clock signals (CLA2,..CLH2) output from the shift circuit (520) and the first to n-th inverted signals output from the inverter elements (INV), to output the first to n-th subtraction signals (-A,....,-H).

3. The sensor driving circuit according to claim 1 or 2, wherein the addition signal outputting sections (531a,..531h) comprise first delay circuits (L2) that receive as their inputs the first to n-th clock signals (CLA1,..,CLH1) output from the shift circuit (520), and output first to n-th delayed signals delayed in accordance with the capacitance values of the first to n-th variable capacitance elements (C11,..C42); and

   a second logical operation circuit (XOR) that performs a logical operation of the first to n-th delayed signals output from the first delay circuits and the first to n-th clock signals (CLA1,..CLH1) output from the shift circuit (520), to output the first to n-th addition signals (A,..H).

4. The sensor driving circuit according to claim 1 or 2, wherein a capacitance electrode of each of the first to n-th variable capacitance elements (C11,..C42) is divided into one electrode corresponding to a first portion of the element in which the distance between capacitance electrodes of the element substantially do not change irrespective of the direction and magnitude of the load, and the other electrode corresponding to a second portion of the element in which the distance between capacitance electrodes of the element changes in accordance with the direction and magnitude of the load, and

> the addition signal outputting sections (531a,..531h) comprise second delay circuits that receive as their inputs the first to n-th clock signals (CLA1,...,CLH1) output from the shift circuit (520), and output first to n-th one electrode side delayed signals delayed in accordance with the capacitance values of the capacitance elements constituted by the one electrodes;
> third delay circuits that receive as their inputs the first to n-th clock signals (CLA1,..CLH1) output from the shift circuit (520), and output first to n-th other electrode side delayed signals delayed in accordance with the capacitance values of the capacitance elements constituted by the other electrodes; and
> a third logical operation circuit that performs a logical operation of the first to n-th one electrode side delayed signals output from the second delay circuits and the first to n-th other electrode side delayed signals output from the third delay circuits, to output the first to n-th addition signals (A,..H).

5. The sensor driving circuit according to any of claim 1 to 4, further comprising a fourth logical operation circuit that performs a logical operation of signals selected out of the first to n-th addition signals (A,..H) output from the addition signal outputting sections (531a,..531h) and the first to n-th subtraction signals (-A,...,-H) output from the subtraction signal outputting sections (532a,..532h), to generate and output a pulse train.

6. The sensor driving circuit according to claim 5, wherein the fourth logical operation circuit receives as its input, in addition to the signals selected out of the first to n-th addition signals (A,..,H) output from the addition signal outputting sections (531a,..531h) and the first to n-th subtraction signals (-A,..H) output from the subtraction signal outputting sections (532a,..532h), ones of the first to n-th clock signals output from the shift circuit (520), which are at high level in pulse periods other than the pulse periods in which the selected signals are at high level.

7. The sensor driving circuit according to claim 5 or 6, wherein the shift circuit (520) outputs to the addition signal outputting sections (531a,..531h) the first to n-th clock signals whose high level periods are shifted by at least one pulse period from each other, in order to bias the high level periods of the pulse train to be output from the fourth logical operation circuit.

8. The sensor driving circuit according to claim 6 or 7, further comprising a smoothing circuit that smoothes the pulse train output from the fourth logical operation circuit to output an analogue output voltage signal,

> the smoothing circuit comprising a resistor and a capacitor.

FIG. 1

FIG. 2

FIG. 3

FIG. 4

FIG. 5

FIG. 6

FIG. 7

FIG. 8

EP 1 975 586 A2

FIG. 9

FIG. 10

# FIG. 11

FIG. 12

FIG. 13

FIG. 14

# FIG. 15

# FIG. 16

# FIG. 17

FIG. 18

EP 1 975 586 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000035358 A